# EUROPEAN PATENT APPLICATION

(11) **EP 4 779 570 A1**
(43) Date of publication of application: **22.07.2026**
(21) Application number: 24882628.1
(22) Date of filing: 30.08.2024
(51) Int. Cl.: G06T 11/60, G06F 40/279, G06F 3/04895, G06T 7/11, G06F 3/0484, G06F 3/0488, G06F 3/16, G06T 7/194, G06N 3/0475

(54) **ELECTRONIC DEVICE AND METHOD FOR IMAGE PROCESSING**

(30) Priority: 24.10.2023 KR 20230143394; 08.01.2024 KR 20240003208
(71) Applicant: Samsung Electronics Co., Ltd., Suwon-si, Gyeonggi-do 16677 (KR)
(72) Inventor: HYUN, Daeyoung, Suwon-si Gyeonggi-do 16677 (KR); KIM, Sungtae, Suwon-si Gyeonggi-do 16677 (KR); MUN, Jihun, Suwon-si Gyeonggi-do 16677 (KR); PARK, Jiyoon, Suwon-si Gyeonggi-do 16677 (KR); YOO, Nagyeom, Suwon-si Gyeonggi-do 16677 (KR)
(74) Representative: Gulde & Partner
(86) International application number: PCT/KR2024/013091
(87) International publication number: WO 2025/089599

(57) **Abstract**

In embodiments, an electronic device is provided. The electronic device may comprise: a display; a processor including a processing circuit; and a memory for storing instructions. The instructions, when executed individually or collectively by the processor, cause the electronic device to: identify an object of an input image and one or more objects associated with the object; generate candidate prompt portions for the object and the one or more objects through an artificial intelligence (Al) model; display the candidate prompt portions and the input image via the display; generate a prompt for image editing on the basis of a user input for at least one of the candidate prompt portions; and generate an output image by performing the image editing on the input image according to the generated prompt through an image AI model. The candidate prompt portions may be used to indicate editable objects in the input image.

## Description

### [Technical Field]

The following descriptions relate to an electronic device and a method for image processing.

### [Background Art]

An electronic device may perform image processing on an image. The electronic device may perform the image processing in response to a user input. For the image processing, a generative artificial intelligence (AI) may be used.

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

In embodiments, an electronic device is provided. The electronic device may comprise a display, a processor including processing circuitry, and memory storing instructions. The instructions may, when executed by the processor individually or collectively, cause the electronic device to identify an object and one or more objects associated with the object in an input image, generate candidate prompt portions for the object and the one or more objects through an artificial intelligence (AI) model, display the candidate prompt portions and the input image through the display, generate a prompt for image editing based on a user input for at least one of the candidate prompt portions, and generate an output image by performing the image editing on the input image according to the generated prompt through an image AI model. The candidate prompt portions may be used to indicate editable objects in the input image.

In embodiments, an electronic device is provided. The electronic device may comprise a display, a processor including processing circuitry, and memory storing instructions. The instructions may, when executed by the processor individually or collectively, cause the electronic device to generate a text for an input image through an artificial intelligence (AI) model, display the input image and the text through the display, in response to a first user input for a target candidate prompt portion among candidate prompt portions of the text, identify an object corresponding to the target candidate prompt portion, generate, through the AI model, detailed prompt portions associated with the object, display the detailed prompt portions associated with the object through the display, and generate a prompt for image editing based on a second user input for indicating an execution prompt among the detailed prompt portions. The candidate prompt portions of the text may respectively correspond to editable objects within the input image.

### [Description of the Drawings]

FIG. 1 is a block diagram of an electronic device in a network environment.
FIG. 2 illustrates an example of generating a prompt using an artificial intelligence (AI) model.
FIG. 3 illustrates an example of candidate prompt portions according to an input image.
FIG. 4 illustrates an example of detailed prompt portions according to selection of a candidate prompt portion.
FIG. 5 illustrates examples of editing actions.
FIG. 6 illustrates an example of a candidate prompt portion.
FIG. 7 illustrates an example of image processing using an AI model.
FIGS. 8A to 8D illustrate examples of scenarios of an image editing function through an interactive service.
FIG. 9 illustrates an operation flow of an electronic device for editing an image using a prompt generated through an AI model.
FIG. 10 illustrates an operation flow of an electronic device for generating a prompt for image editing.
FIG. 11 illustrates an operation flow of an electronic device for editing an image including an object and a background.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to signals (e.g., signal, information, message, and signaling), terms referring to data types (e.g., list, set, and subset), terms for operational states (e.g., step, operation, and procedure), terms referring to data (e.g., packet, user stream, information, bit, symbol, and codeword), terms referring to resources (e.g., symbol, slot, subframe, radio frame, subcarrier, resource element (RE), resource block (RB), bandwidth part (BWP), and occasion), terms referring to channels, terms referring to network entities, terms referring to components of a device, and the like used in the following description are exemplified for convenience of description. Accordingly, the present disclosure is not limited to the terms described below, and other terms having equivalent technical meanings may be used.

Terms referring to input data to an artificial intelligence (AI) model (e.g., signal, information, input data, prompt, candidate prompt, prompt phrase, input text, and input object), information for representing an object (e.g., prompt portion, prompt region, prompt target, candidate prompt portion, prompt object, object indicator, object indication information, object input information, masking region indication information, and masking information), terms referring to components of a device, and the like used in the following description are exemplified for convenience of description. Accordingly, the present disclosure is not limited to the terms described below, and other terms having equivalent technical meanings may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

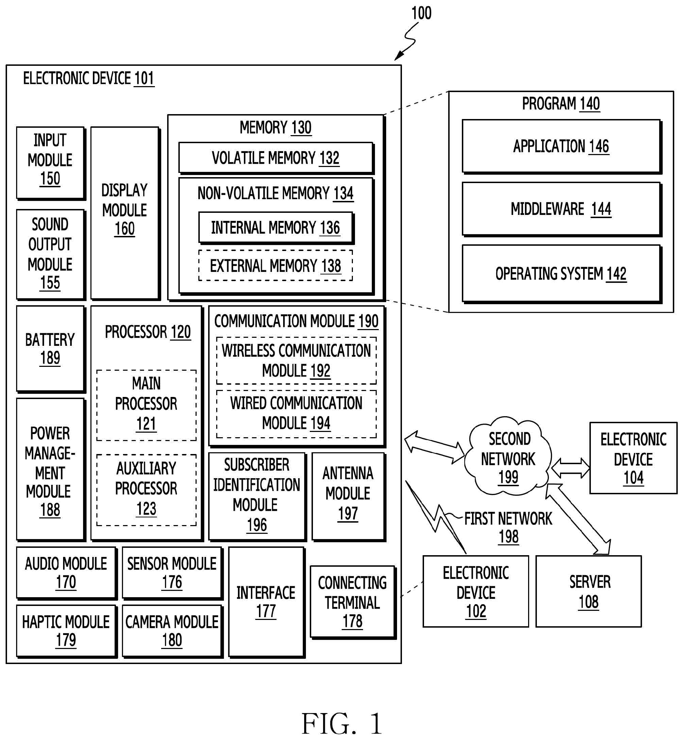

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

As various image editing has become possible with an introduction of a generative artificial intelligence (AI), a user may perform image editing more conveniently. By inputting a prompt for image editing into an AI model, the user may obtain a desired output image. Meanwhile, in an electronic device, it has not been easy to specify only a portion within an image that is desired to be edited, and referring to an image processing function for the corresponding portion has been limited. In various embodiments of the present disclosure, a technology for generating a prompt for image editing is provided. The user may more conveniently select a portion of an image that is desired to be edited, and may perform various editing. For example, through text selection, a touch input for a region of an image, a text, a multi-modal input, and/or a voice input, the electronic device may automatically generate a prompt for performing editing on a desired portion of the image.

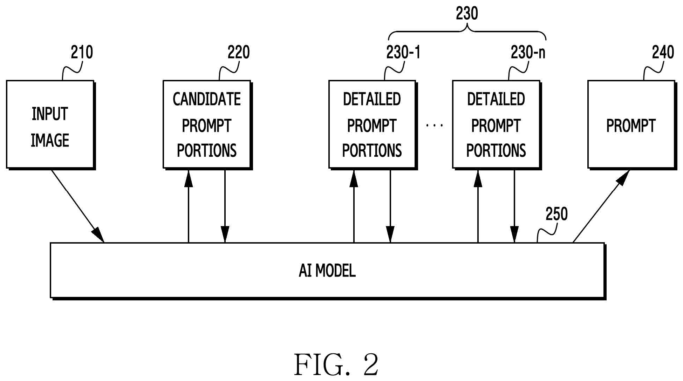

FIG. 2 illustrates an example of generating a prompt using an artificial intelligence (AI) model. An electronic device (e.g., an electronic device 101) may generate a prompt.

Referring to FIG. 2, the electronic device 101 may obtain an input image 210. The input image 210 may be input to an AI model 250. The electronic device 101 may analyze the input image 210 through the AI model 250. The AI model 250 may be an AI model configured to generate a prompt 240 for image processing. The AI model 250 may be configured to output the prompt 240 based on input data (e.g., the input image 210 and a user input). The electronic device 101 may use the AI model 250. For example, the electronic device 101 may input input data (e.g., the input image 210 and a selected object) to the AI model 250 implemented in a form of an on-device inside the electronic device 101. The electronic device 101 may obtain output data (e.g., candidate prompt portions 220 and detailed prompt portions 230) corresponding to the input data. For another example, the electronic device 101 may use the AI model 250 located in another electronic device (e.g., an electronic device 102, an electronic device 104, or a server 108). The electronic device 101 may transmit the input data (e.g., the input image and a selected object) to the another electronic device, and receive a result (e.g., the candidate prompt portions 220 and the detailed prompt portions 230) from the AI model 250. For still another example, the electronic device 101 may use both the AI model implemented on-device and an AI model located externally. Hereinafter, operations of the electronic device 101 are described based on the AI model 250 of the electronic device 101, but embodiments of the present disclosure are not limited thereto. According to an embodiment, at least a portion of the AI model 250 may be located in another electronic device (e.g., the electronic device 102, the electronic device 104, or the server 108) and the electronic device 101 may receive data from the another electronic device.

The AI model 250 for generating the prompt 240 may be generated and/or updated through training. The training of the AI model 250 may be performed by the electronic device 101 itself (e.g., the auxiliary processor 123 of FIG. 1) or may be performed through a separate server (e.g., the server 108). According to an embodiment, the training of the AI model 250 may be performed based on a user input received in a process of generating the input image 210, the candidate prompt portions 220, and/or the detailed prompt portions 230. For example, the AI model 250 may identify a type of an object or a method of image processing preferred by a user who desires image editing, through statistics of the detailed prompt portions 230 related to generation of the final prompt 240. The training of the AI model 250 may be performed through the identified type and the identified method. As a non-limiting example, supervised training of the AI model 250 may be performed according to whether the generated prompt 240 is actually input to an image AI model or whether the prompt is rewritten. According to an embodiment, the training of the AI model 250 may be performed based on image analysis. For example, if a resolution of the input image 250 or a resolution of a main object within the input image 250 is lower than a threshold (e.g., an average value of previously input images, a resolution of an image for which resolution adjustment was previously requested, or a resolution determined according to a type of the input image 250) the AI model 250 may generate the prompt 240 including an instruction (e.g., text representing upscaling) requesting an increase in resolution. The threshold may be set through training. For example, if saturation or brightness of the input image 250 is higher than a threshold, the AI model 250 may generate the prompt 240 including an instruction requesting a decrease in saturation or brightness. The threshold may be set through training.

The electronic device 101 may identify an object included in the input image 210. The electronic device 101 may identify a target object. The target object represents an object that may be recognized as a main region within the input image 210. For example, the electronic device 101 may identify the target object from the input image 210 through an AI algorithm. For example, the electronic device 101 may identify, as the target object, an object among objects of the input image 210 that occupies a central region the most. For example, the electronic device 101 may identify the target object among the objects of the input image 210 according to a category of an editing history of the user. As an example, in a case that the user of the electronic device 101 has a greater history of editing a flower than another object (e.g., a person or a background), the flower or an object related to the flower may be identified as the target object. The electronic device 101 may generate a segmentation region (or which may be referred to as a masking region) associated with the target object. The segmentation region represents a region including the target object.

The electronic device 101 may identify one or more objects related to the target object. For example, the electronic device 101 may identify an object positioned within a predetermined range from the target object. For example, the electronic device 101 may identify an object of the same type as the target object (e.g., in a case that the target object is a person, an object representing a person). For example, the electronic device 101 may identify an object having a property similar to the target object (e.g., the same color family). The electronic device 101 may generate a segmentation region associated with the object. The segmentation region represents a region including the object.

The electronic device 101 may generate a candidate prompt portion for the target object. For example, the candidate prompt portion may include a text for describing the target object. For another example, the candidate prompt portion may be an icon or an image portion representing the target object. The electronic device 101 may generate a candidate prompt portion for an object related to the target object. For example, the candidate prompt portion may include a text for describing the target object. For another example, the candidate prompt portion may be an icon or an image portion representing the target object. The electronic device 101 may generate the candidate prompt portions 220 from the input image 210 through the AI model 250. The candidate prompt portions 220 may be used to determine the prompt 240 to be finally generated. According to an embodiment, the candidate prompt portions 220 may indicate editable objects. For example, the input image 210 may include a plurality of objects. The plurality of objects may be editable objects through image processing. The plurality of objects may respectively correspond to the candidate prompt portions 220. The electronic device 101 may display the candidate prompt portions 220. The electronic device 101 may display the candidate prompt portions 220 through a display (e.g., a display module 160) to inform the user of the editable objects. The electronic device 101 may receive a user input indicating at least one of the candidate prompt portions 220. For example, the user input may indicate a specific object within the input image 210. The electronic device 101 may input a candidate prompt portion corresponding to the user input to the AI model 250. The electronic device 101 may generate the detailed prompt portions 230 through the AI model 250. The detailed prompt portions 230 may be associated with the specific object indicated by the user input.

The electronic device 101 may display the detailed prompt portions 230. The detailed prompt portions 230 may indicate detailed objects (or detailed items) related to the specific object. For example, in a case that the specific object is a person, the detailed objects may include an earring, clothes, a hat, and/or glasses. At least one of the detailed prompt portions 230 may indicate an editing action. For example, in a case that the specific object is a person, a detailed prompt portion may indicate a change in a facial expression of the person (e.g., smiling, crying, or frowning). For another example, in a case that the specific object is a tree, a detailed prompt portion may indicate a change in a color of a leaf of the tree (e.g., green, brown, yellow, or ocher). For example, the electronic device 101 may display first detailed prompt portions 230-1. The electronic device 101 may receive a user input for at least one of the first detailed prompt portions 230-1. Through the user input, the electronic device 101 may input information on a specific detailed item among detailed items of a specific object to the AI model 250. The electronic device 101 may obtain second detailed prompt portions for the specific detailed item from the AI model 250. In this manner, the AI model 250 may also generate n-th detailed prompt portions 230-n having a hierarchical structure in response to at least one user input.

The electronic device 101 may determine a detailed prompt portion to induce editing in a direction desired by the user in response to user inputs. The electronic device 101 may receive a user input for a detailed prompt portion indicating an editing action. The electronic device 101 may generate the prompt 240 to be finally used for image editing in response to the user input. The electronic device 101 may generate the prompt 240 through the AI model 250. For example, the electronic device 101 may input information on the detailed prompt portion indicated by the user input to the AI model 250. The AI model 250 may generate the prompt 240 using a candidate prompt portion and detailed prompt portions (e.g., a first detailed prompt portion, a second detailed prompt portion, ..., an n-th detailed prompt portion) selected by the user of the electronic device 101.

The prompt 240 generated through the AI model 250 may include instructions to be input to an AI model for generating an output image through image editing (hereinafter, an image AI model). For example, the prompt 240 may include not only content regarding an object, a subject, and/or a background to be input to the image AI model, but also a portion (e.g., text) regarding a technical element for image processing. According to an embodiment, a portion of the prompt 240 may include a text instruction for image processing (e.g., high dynamic range (HDR), color, lighting, or resolution). The instruction may be provided not only through a direct text (e.g., HDR, color-#99FF66 (a color corresponding to R=153, G=255, and B=102 in RGB), or setting resolution to QHD) but also through a keyword predefined for the image AI model (e.g., fhd - resolution control, qhd - resolution control, uhd - resolution control, HDR - HDR image processing, or color_xxx - color control to xxx). For example, a portion of the prompt 240 may include 'HDR'. The image AI model may provide an output image in which HDR processing for the input image 210 is performed through the portion. For example, a portion of the prompt 240 may include "child_light_xx". The image AI model may provide an output image in which brightness of a region including a child within the input image 210 is 'xx' through the portion. For example, a portion of the prompt 240 may include "resolution_UHD". The image AI model may provide an output image having a resolution corresponding to UHD (e.g., 3840 x 2160) by adjusting a resolution of the input image 210 (e.g., upscaling) through the portion. In addition, according to an embodiment, a portion of the prompt 240 may include an instruction of an element indicating a means of expression of an image (e.g., oil painting, illustration, photograph, or 3D rendering). According to the means of expression instructed through the instruction, the image AI model may provide an output image by reconstructing the input image 210 in a style according to the instructed means of expression. The instruction may be provided not only through a direct text (e.g., oil painting, illustration, photograph, or 3D rendering) but also through an identification number predefined for the image AI model (e.g., 1-oil painting, 2-illustration, 3-photograph, or 4-3D rendering) or a keyword (e.g., oil-oil painting, ill-illustration, pho-photograph, or 3d-3D rendering).

In addition to the above-described examples, an image in which high-quality image processing is performed may be output. For example, the prompt 240 may include words such as 'HDR', 'UHD', or '64K'. For another example, the prompt 240 may include 'highly detailed', 'studio lighting', 'professional', 'vivid color' (or clear and intense color), or 'bocke'. An output image may be provided according to words included in the prompt 240. As an example, a prompt 240 such as "The child is riding a horse and a man in a hat is helping the child. The child is smiling brightly. It's outdoors with mountains in the back. HDR, highly detailed, Studio Lighting, Professional." may be input to the image AI model. Through this, an output image including a child riding a horse and a man in a hat helping the child, having high resolution and high detail processing, and reflecting a 'studio lighting' effect and a 'professional' effect may be provided. The 'studio lighting' effect and/or the 'professional' effect may represent image processing according to a predefined setting in the image AI model.

Hereinafter, in various embodiments of the present disclosure, a term expressed as a candidate prompt portion may be referred to, in terms of selecting an editable object, as an object keyword, a key phrase, an object identification word, an object identification phrase, a candidate portion, candidate prompt data, an object prompt portion, a first prompt portion, a candidate wording portion, a candidate context, a first context, and/or an equivalent technical term.

Hereinafter, in various embodiments of the present disclosure, a term expressed as a detailed prompt portion may be referred to as a detailed candidate prompt portion, a detailed keyword, a detailed key phrase, a detailed object identification word, a detailed object identification phrase, a detailed candidate portion, detailed prompt data, a detailed object prompt portion, a second prompt portion, a detailed wording portion, a detailed context, a second context, and/or an equivalent technical term.

Hereinafter, in various embodiments of the present disclosure, a term expressed as a description text to represent a description of an image may be referred to, in addition to the description text, as narrative information, description information, a description portion, a text portion, a narrative portion, a description object, a visual object, a visual portion, a narrative object, and/or an equivalent technical term.

A processor 120 of the present disclosure may include various processing circuitry and/or multiple processors. For example, the term "processor" used in this document, including the claims, may include various processing circuitry including at least one processor, and one or more of the at least one processor may be configured to individually and/or collectively perform various function(s) described in the present disclosure. As used in the present disclosure, in a case that "a processor", "at least one processor", and "one or more processors" are described as being configured to perform various functions, such terms may include, for example and without limitation, situations in which one processor performs the cited functions, situations in which some of the cited functions are performed by one processor and other cited functions are performed by other processor(s), situations in which a single processor performs all of the cited functions, and/or a combination of processors that perform the cited functions in a distributed manner. In addition, instructions (or program commands) for various function(s) in the present disclosure, when executed by the processor, may cause an electronic device (e.g., the electronic device 101) to execute the various function(s).

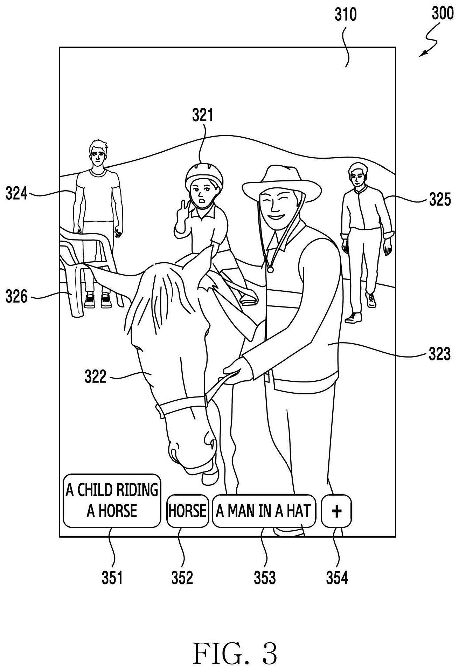

FIG. 3 illustrates an example of candidate prompt portions (e.g., candidate prompt portions 220) according to an input image (e.g., an input image 210).

Referring to FIG. 3, an electronic device (e.g., an electronic device 101) may obtain an input image 300. The input image 300 may include a background region 310. The input image 300 may include a plurality of objects. For example, the input image 300 may include a first object 321, a second object 322, a third object 323, a fourth object 324, a fifth object 325, and/or a sixth object 326. In order to easily edit the input image 300, it is required that a user readily recognize editable objects within the input image 300. The electronic device 101 may display candidate prompt portions corresponding to the editable objects. The candidate prompt portions may include a description, a name, and/or an image for each editable object. As the candidate prompt portions are displayed, a user of the electronic device 101 may select an object to be edited with a single input.

The electronic device 101 may identify a target object from the input image 300. For example, the electronic device 101 may identify the first object 321 as the target object. The electronic device 101 may generate a first candidate prompt portion 351 indicating the first object 321. The electronic device 101 may display the first candidate prompt portion 351. For example, the first object 321 may be a child in the input image 300. The electronic device 101 may display the first candidate prompt portion 351 including text 'a child riding a horse' through a display (e.g., a display module 160).

The electronic device 101 may identify one or more objects associated with the first object 321. For example, the electronic device 101 may identify objects (e.g., the second object 322 and the third object 323) positioned within a predetermined range from the first object 321. The electronic device 101 may generate a second candidate prompt portion 352 indicating the second object 322. The electronic device 101 may generate a third candidate prompt portion 353 indicating the third object 323. The electronic device 101 may display the second candidate prompt portion 352. The electronic device 101 may display the third candidate prompt portion 353. For example, the second object 322 may be a horse in the input image 300. The third object 323 may be an adult in the input image 300. The electronic device 101 may display the second candidate prompt portion 352 including text 'horse' through the display (e.g., the display module 160). The electronic device 101 may display the third candidate prompt portion 353 including text 'a man in a hat' through the display (e.g., the display module 160).

The input image 300 may further include other objects (e.g., the fourth object 324, the fifth object 325, and the sixth object 326) in addition to the first object 321, the second object 322, and the third object 323. The electronic device 101 may display a button 354 for selecting one of the other objects or for requesting a candidate prompt portion for at least one of the other objects. In response to a user input for the button 354, the electronic device 101 may display an additional candidate prompt portion in addition to the first candidate prompt portion 351, the second candidate prompt portion 352, and the third candidate prompt portion 353. For example, the electronic device 101 may first display the first candidate prompt portion 351 corresponding to the first object 321, which is a main object, and may additionally display the second candidate prompt portion 352 corresponding to the second object 322 and the third candidate prompt portion 353 corresponding to the third object 323.

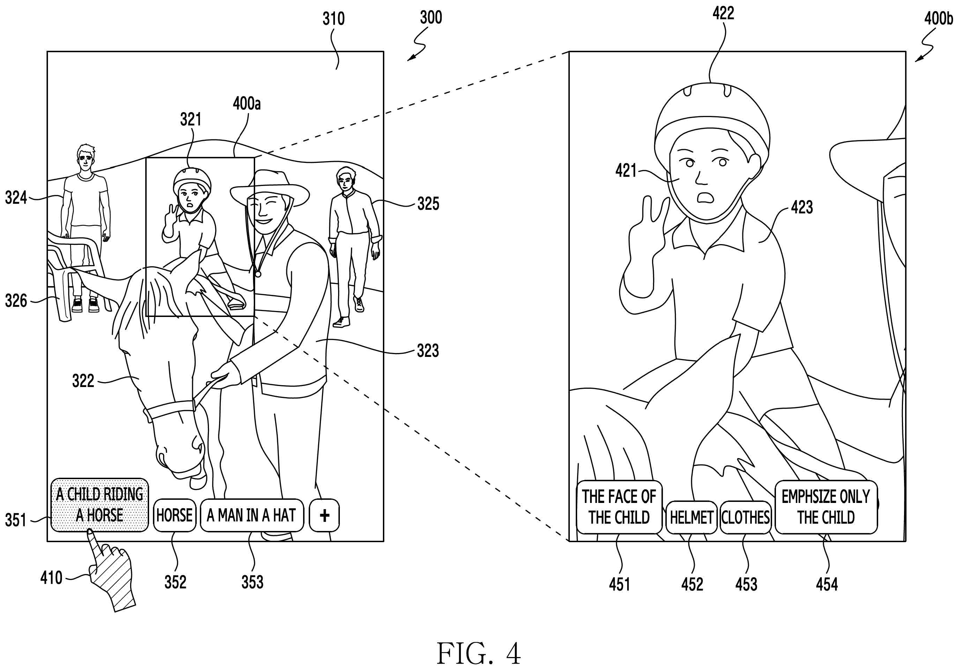

The electronic device 101 may display candidate prompt portions to inform the user of editable objects. The electronic device 101 may receive a user input indicating at least one of the candidate prompt portions. Based on the object identified by the user input (e.g., the first object 321), the electronic device 101 may generate detailed prompt portions indicating editable options. A description of the detailed prompt portions is described with reference to FIG. 4. Meanwhile, the user of the electronic device 101 may desire to edit an object other than the objects (e.g., the first object 321, the second object 322, and the third object 323) provided by the displayed candidate prompt portions (e.g., the first candidate prompt portion 351, the second candidate prompt portion 352, and the third candidate prompt portion 353). For example, the electronic device 101 may receive a user input. The user input may indicate another object (e.g., the fourth object 324, the fifth object 325, or the sixth object 326) within the input image 300. For example, the user input may include a text input, a multi-modal input, or a voice input indicating the another object. Based on the object identified by the user input (e.g., the fourth object 324), the electronic device 101 may generate detailed prompt portions indicating editable options.

FIG. 4 illustrates an example of detailed prompt portions according to selection of a candidate prompt portion. FIG. 4 illustrates a situation in which the first candidate prompt portion 351, among the candidate prompt portions of FIG. 3, is selected.

Referring to FIG. 4, an electronic device 101 may display an input image 300 and a plurality of candidate prompt portions through a display (e.g., a display module 160). For example, the plurality of candidate prompt portions may include a first candidate prompt portion 351 including text 'a child riding a horse', a second candidate prompt portion 352 including text 'horse', and a third candidate prompt portion 353 including text 'a man in a hat'. The electronic device 101 may receive a user input 410 on the first candidate prompt portion 351. In FIG. 4, the user input 410 including a touch input for the first candidate prompt portion 351 is illustrated as an example, but embodiments of the present disclosure are not limited thereto. An input for selecting the first candidate prompt portion 351 may be, in addition to a touch input, an input through a separate input means (e.g., a controller, a keyboard, or a pen), a multi-modal input, and/or a voice input.

In response to the user input 410, the electronic device 101 may identify an object region (e.g., an object region 400a) including a first object 321 corresponding to the first candidate prompt portion 351. The object region 400a may include a segmentation region corresponding to the first object 321. The segmentation region indicates a region corresponding to the first object 321 within the input image 300. The object region 400a may be set as a region of interest (ROI). The electronic device 101 may perform analysis on the object region 400a. Through the analysis, the electronic device 101 may generate detailed prompt portions indicating one or more objects included in the object region 400a. The one or more objects may include detailed items of the first object 321. The electronic device 101 may display the detailed prompt portions through the display (e.g., the display module 160).

The electronic device 101 may enlarge the object region 400a. The electronic device 101 may display an image 400b in which the object region 400a is enlarged. The image 400b may include an object region with a magnification greater than a magnification of the object region 400a in the input image 300. The image 400b may include detailed items of the first object 321. For example, the image 400b may include a face 421 of the child, a helmet 422, and/or clothes 423. The electronic device 101 may provide editable detailed items of the first object 321 to enable detailed editing of the first object 321. The electronic device 101 may display detailed prompt portions corresponding to the detailed items. For example, the electronic device 101 may display a first detailed prompt portion 451 corresponding to the face 421 of the child. The electronic device 101 may display a second detailed prompt portion 452 corresponding to the helmet 422. The electronic device 101 may display a third detailed prompt portion 453 corresponding to the clothes 423.

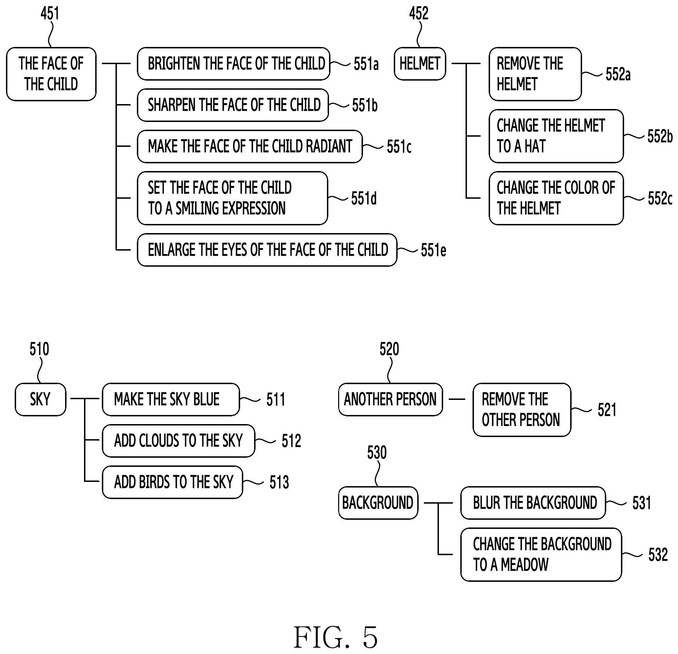

A detailed prompt portion may include, in addition to indicating an editable detailed item for a specific object, an editing action for the specific object. For example, the electronic device 101 may display a fourth detailed prompt portion 454. The fourth detailed prompt portion 454 may indicate image editing (e.g., emphasis) of the first object 321 (e.g., the child). The fourth detailed prompt portion 454 may include text including 'emphasize only the child '. In FIG. 4, 'emphasis' processing is described as an example, but embodiments of the present disclosure are not limited thereto. Any detailed prompt portion indicating a function for image editing may be understood as an embodiment of the present disclosure. For example, in a case that the specific object is a blurred object, the detailed prompt portion may indicate deblurring. In a case that the specific object is sky, the detailed prompt portion may indicate cloud removal or color adjustment. An editing action provided through the detailed prompt portion may vary according to a type of an object selected in a previous step. For a specific example of an editing action, FIG. 5 may be referenced.

FIG. 5 illustrates examples of editing actions. Referring to FIG. 5, in response to a user input for a first detailed prompt portion 451, an electronic device 101 may display candidate editing actions for a face 421 of a child as a detailed prompt portion. For example, the candidate editing actions may include 'brighten the face of the child' 551a, 'sharpen the face of the child' 551b, 'make the face of the child radiant 551c, 'set the face of the child to a smiling expression' 551d, and/or 'enlarge eyes of the face of the child' 551e. In response to a user input for a second detailed prompt portion 452, the electronic device 101 may display candidate editing actions for a helmet 422 as a detailed prompt portion. For example, the candidate editing actions may include 'remove the helmet' 552a, 'change the helmet to a hat' 552b, and/or 'change a color of the helmet' 552c.

The electronic device 101 may receive a user input for selecting another object in addition to the presented detailed items. For example, the electronic device 101 may receive a user input for sky 510 among a background region of an input image 300. The electronic device 101 may display candidate editing actions for the sky 510 as a detailed prompt portion. The candidate editing actions may include 'make the sky blue' 511, 'add a cloud to the sky' 512, and/or 'add a bird to the sky' 513. For example, the electronic device 101 may display a candidate editing action for another person 520 (e.g., a fourth object 324) within the input image 300. The candidate editing action may include 'remove the another person' 521. For example, the electronic device 101 may display a candidate editing action for a background person 530 (e.g., a background region 310) within the input image 300. The candidate editing action may include 'blur the background' 531 and/or 'change the background to a meadow' 532.

Thus, by displaying detailed items and/or editing actions after a first object 321, the electronic device 101 may enable the user to perform stepwise selections. In response to a user input indicating at least one of the detailed prompt portions, the electronic device 101 may perform a subsequent operation. For example, the electronic device 101 may display texts of secondary detailed items that more specifically express a selected detailed item. For another example, the electronic device 101 may perform an editing action indicated by a detailed prompt portion. As an example, the electronic device 101 may perform image processing in which an outline of the child of the first object 321 in an object region 400a of the input image 300 is emphasized. According to selection of the user, an editing target may be further specified or a prompt including an editing command may be updated. If an object or a detailed item is selected, a selected region may be enlarged. In addition, in the selected region, more specifically described detailed prompt portions may be displayed. Through repetition of such a hierarchical structure, the electronic device 101 may provide the user with a more detailed image editing function. As a non-limiting example, of course, editing may be performed not only through a user input but also through touch, voice, and/or a separate text input.

The electronic device 101 may generate a prompt (e.g., a prompt 240), which is a final command, through selections of the user. The electronic device 101 may generate the prompt 240 including prompt portions by user inputs through an AI model (e.g., an AI model 250). The electronic device 101 may obtain an output image through the input image 300, the prompt 240, and a region of an object to be edited (e.g., the first object 321, or in a case that a detailed item is determined, the detailed item (e.g., the helmet 422)). The electronic device 101 may input the input image 300, the prompt 240, and the region of the object to an image AI model. The electronic device 101 may obtain the output image from the image AI model. The output image may represent a result of image processing performed according to the prompt 240.

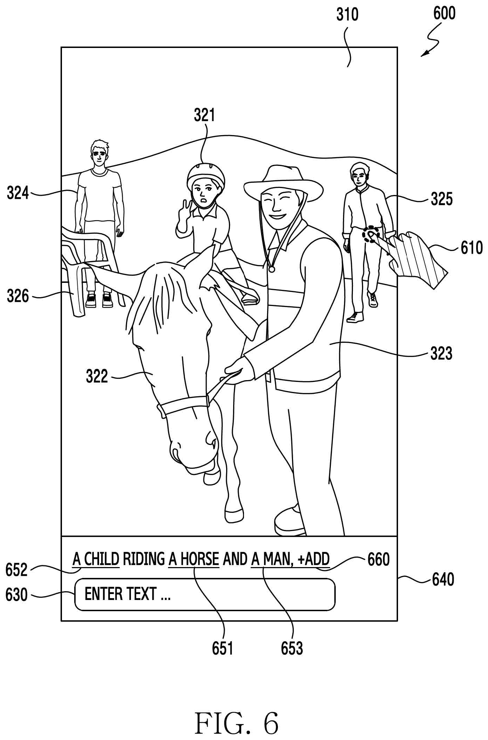

FIG. 6 illustrates an example of a candidate prompt portion.

Referring to FIG. 6, an electronic device 101 may display a screen 600. The screen 600 may include an input image 300. The electronic device 101 may display the screen 600 through a display (e.g., a display module 160). The input image 300 may include a plurality of objects. For example, the input image 300 may include a first object 321, a second object 322, a third object 323, a fourth object 324, a fifth object 325, and/or a sixth object 326. In order to easily edit the input image 300, it is required that a user readily recognize editable objects within the input image 300.

The electronic device 101 may display candidate prompt portions corresponding to the editable objects. According to an embodiment, the electronic device 101 may display the candidate prompt portions in a sentence format including a plurality of words. Each word may represent an object of the input image 300. The screen 600 may include a control region 640. The electronic device 101 may display the candidate prompt portions configured as a sentence on the control region 640. For example, the electronic device 101 may display text 'a child riding a horse and a man'. In the text, the word 'horse' may correspond to a first candidate prompt portion 651. The first candidate prompt portion 651 may indicate that it is an editable object through additional indication (e.g., underlining, bolding, or a color different from the rest of the sentence). The first candidate prompt portion 651 may correspond to the second object 322. In the text, the word 'child' may correspond to a second candidate prompt portion 652. The second candidate prompt portion 652 may indicate that it is an editable object through additional indication (e.g., underlining, bolding, or a color different from the rest of the sentence). The second candidate prompt portion 652 may correspond to the first object 321. In the text, the word 'man' may correspond to a third candidate prompt portion 653. The third candidate prompt portion 653 may indicate that it is an editable object through additional indication (e.g., underlining, bolding, or a color different from the rest of the sentence). The third candidate prompt portion 653 may correspond to the third object 323.

The user of the electronic device 101 may desire image editing for another object (e.g., the fourth object 324, the fifth object 325, or the sixth object 326). The electronic device 101 may display a button 660 for adding an object within the control region 640. In response to a user input for the button 660, the electronic device 101 may display an additional candidate prompt portion (e.g., "chair in front of a man" corresponding to the sixth object 326). The electronic device 101 may select a target to be edited not only through a simple touch input but also through a separate text input or a voice input. For example, the electronic device 101 may display an input field 630. The electronic device 101 may input a target to be edited (e.g., "person wearing glasses") through a text input on the input field 630. In response to the text input, the electronic device 101 may identify the fifth object 325. Although not illustrated in FIG. 6, the electronic device 101 may display detailed prompt portions corresponding to detailed items of the fifth object 325. The electronic device 101 may perform image editing for the fifth object 325 in response to a user input for at least one of the detailed prompt portions.

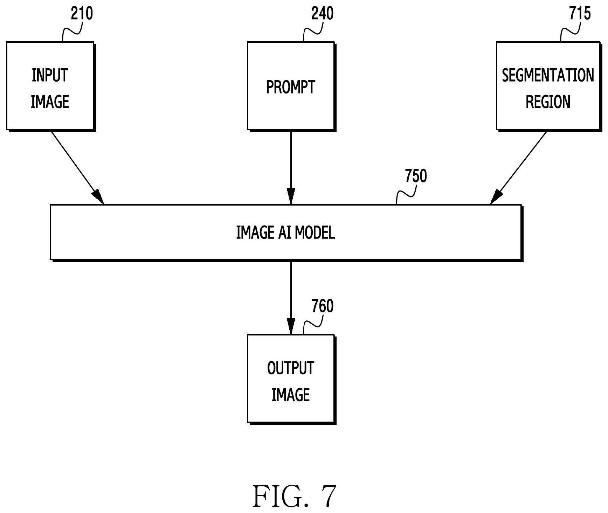

FIG. 7 illustrates an example of image processing using an AI model. The AI model may be distinguished from an AI model for generating a prompt (e.g., the prompt 240) described with reference to FIG. 2 to FIG. 6. The AI model may be referred to as an image AI model in terms of image editing, rather than generating the prompt 240. According to an embodiment, the AI model may include a generative AI model.

Referring to FIG. 7, an electronic device 101 may generate an output image 760 through an image AI model 750. The electronic device 101 may generate the output image 760 through the image AI model 750 that uses an input image 210 (or an input image 300), the prompt 240, and a segmentation region 715 as input data. As described with reference to FIG. 2 to FIG. 6, the electronic device 101 may generate the prompt 240 for image editing through user inputs. For example, the electronic device 101 may generate the prompt 240 through an AI model 250 that uses the input image 210 (or the input image 300) as input data. In a process of selecting an object using the AI model 250, the electronic device 101 may receive one or more user inputs. For example, as illustrated in FIG. 4, the electronic device 101 may receive a user input indicating 'a child riding a horse' (e.g., a user input for a first candidate prompt portion 351), a user input indicating 'a face of the child' (e.g., a user input for a first detailed prompt portion 451), and a user input indicating 'setting the face of the child to a smiling expression' 551d. The electronic device 101 may generate the prompt 240 including prompt portions obtained through the user inputs. For example, the electronic device 101 may generate a text such as 'change the face of the child riding the horse to a smiling expression' as the prompt 240. The electronic device 101 may edit an image according to the prompt 240 generated for editing.

The electronic device 101 may specify an object to be edited within the input image 300 through the user inputs. As more detailed items are selected through the user inputs, an editing target may become more specified. The electronic device 101 may determine the segmentation region 715 in which image processing is to be performed through the user inputs. For example, the electronic device 101 may specify a first object 321 representing the child. In addition, for example, the electronic device 101 may specify a face 421 of the child in the first object 321. The face 421 of the child may be determined as the segmentation region 715. The image AI model 750 may perform image processing according to the prompt 240 on the segmentation region 715 of the input image 210.

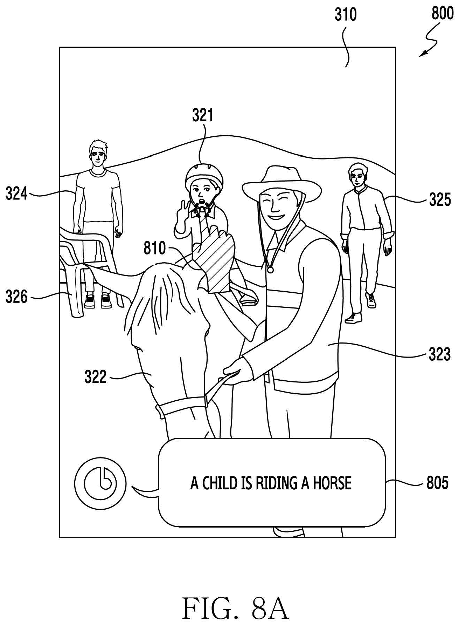

FIGS. 8A to 8D illustrate examples of scenarios of an image editing function through an interactive service.

Referring to FIG. 8A, an electronic device 101 may display a screen 800. The screen 800 may include an input image 300. The electronic device 101 may display the screen 800 through a display (e.g., a display module 160). The electronic device 101 may display a description text 805 for the input image 300. For example, the electronic device 101 may identify a first object 321 ('child'), which is a target object, in the input image 300. The electronic device 101 may generate the description text 805 associated with the first object 321. The electronic device 101 may display the description text 805 through the display (e.g., the display module 160). For example, the description text 805 may represent 'A child is riding a horse'.

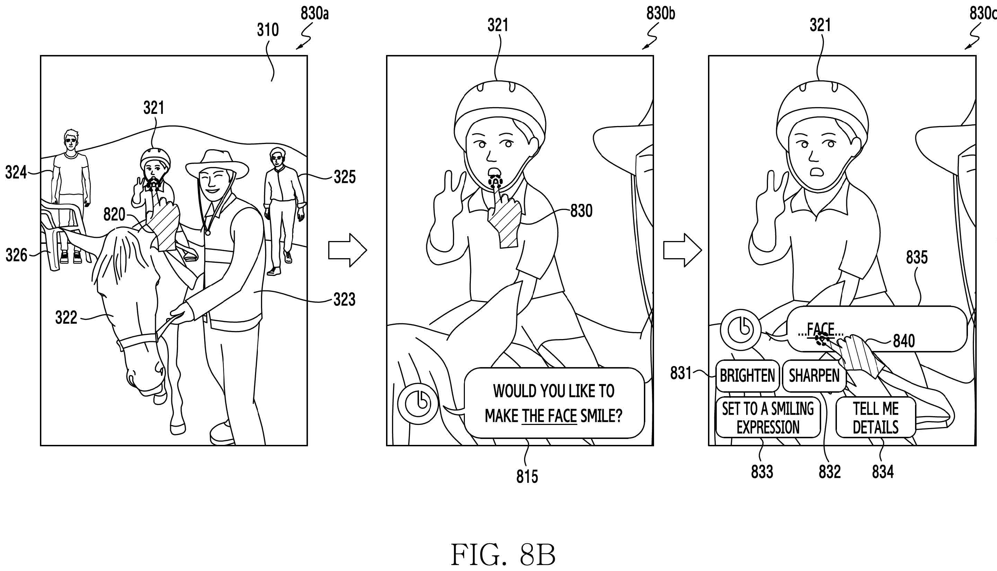

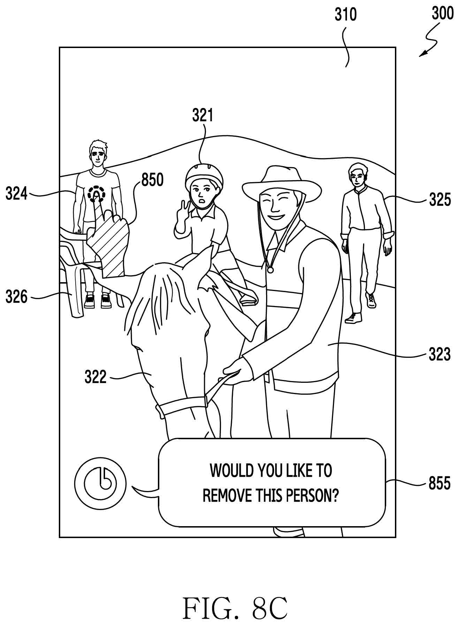

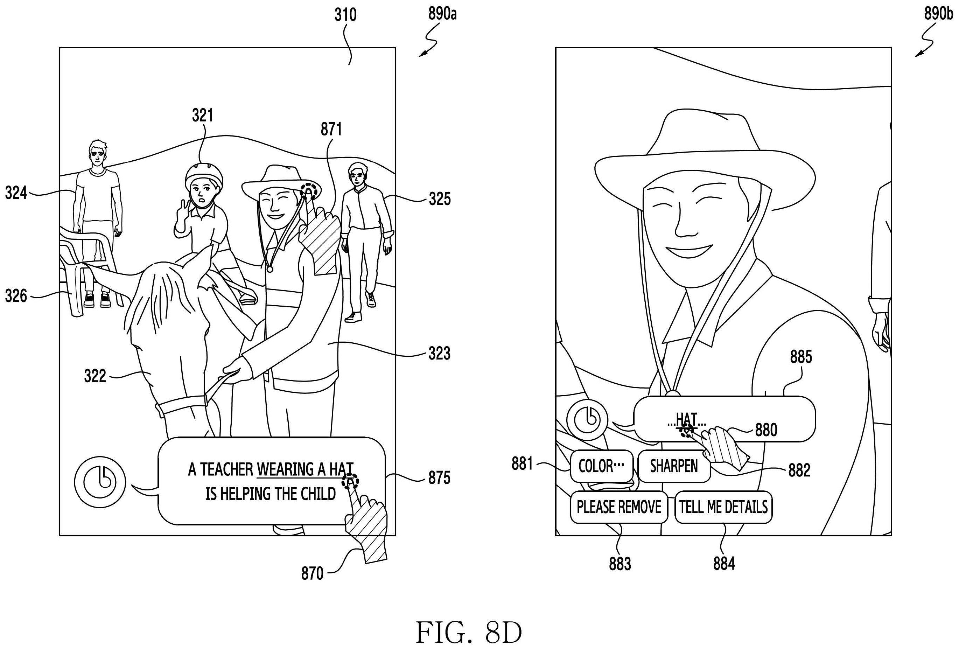

The electronic device 101 may receive a user input. According to which object the user input indicates within the input image 300, the electronic device 101 may display a specific screen. The electronic device 101 may determine which object an intention of the user input is directed and/or which editing is desired, and may display a screen according to the determined result. Hereinafter, according to an embodiment, in a case that a user input for a target object (e.g., the first object 321) is received, examples of a screen displayed following the screen 800 are described with reference to FIG. 8B. According to another embodiment, in a case that a user input for another object (e.g., a fourth object 324) is received, examples of a screen displayed following the screen 800 are described with reference to FIG. 8C. According to still another embodiment, in a case that a user input for an object (e.g., a third object 323) associated with the target object is received, examples of a screen displayed following the screen 800 are described with reference to FIG. 8D.

Referring to FIG. 8B, the electronic device 101 may display a screen 830a. On the screen 830a, the electronic device 101 may receive a user input 810 indicating the first object 321. In response to the user input 810, the electronic device 101 may display a screen 830b. The screen 830b may include the first object 321 with a magnification greater than a magnification of the first object 321 in the screen 830a. The electronic device 101 may determine an object region displayed through the screen 830b as a region of interest (ROI). The electronic device 101 may receive a user input 830 indicating a face on the first object 321 on the screen 830b. In response to the user input 830, the electronic device 101 may display an inquiry text 815. The inquiry text 815 may indicate an editing option for the face of the first object 321. The electronic device 101 may display the inquiry text 815 through the display (e.g., the display module 160). For example, the inquiry text 815 may represent 'Would you like to make the face smile?'. The electronic device 101 may receive a confirmation response or a rejection response to the inquiry text 815. For example, the electronic device 101 may receive, as the confirmation response, a user input for the face of the first object 321. For example, in a case that no additional input is received for a predetermined time, the electronic device 101 may obtain the rejection response.

The electronic device 101 may display a screen 830c. The screen 830c may be used to provide options for other image editing. The electronic device 101 may display a description text 835 corresponding to at least a portion of the inquiry text 815. The electronic device 101 may receive a user input 840 on the inquiry text 815. In response to the user input 840, the electronic device 101 may display candidate prompt portions for editing. The candidate prompt portions may include a first candidate prompt portion 831, a second candidate prompt portion 832, a third candidate prompt portion 833, and a fourth candidate prompt portion 834. The first candidate prompt portion 831 may include text 'brighten'. The first candidate prompt portion 831 may indicate an editing action of brightening the first object 321 of the input image 300. The second candidate prompt portion 832 may include text 'sharpen'. The second candidate prompt portion 832 may indicate an editing action of sharpening the first object 321 of the input image 300. The third candidate prompt portion 833 may include text 'set to a smiling expression'. The third candidate prompt portion 833 may indicate an editing action of changing the face of the child corresponding to the first object 321 of the input image 300 to a smiling expression. The fourth candidate prompt portion 834 may include text 'Tell me details'. The fourth candidate prompt portion 834 may be used to request an additional image editing option different from the first candidate prompt portion 831, the second candidate prompt portion 832, and the third candidate prompt portion 833. The electronic device 101 may generate a prompt 240 for image editing based on a user input indicating at least one of the above-described options.

Referring to FIG. 8C, the electronic device 101 may display a screen 860. The screen 860 may include the input image 300. On the screen 860, the electronic device 101 may receive a user input 850 indicating the fourth object 324. In response to the user input 850, the electronic device 101 may display an inquiry text 855. The inquiry text 855 may indicate an editing option for the fourth object 324. The electronic device 101 may display the inquiry text 855 through the display (e.g., the display module 160). For example, the inquiry text 855 may represent 'Would you like to remove this person?'. Since the fourth object 324 has low relevance to the first object 321, which is the target object, the electronic device 101 may determine that an intention of the user is to remove the fourth object 324. If a confirmation response to the inquiry text 855 is received, the electronic device 101 may generate a prompt for removing the fourth object 324. The electronic device 101 may obtain an output image through an image AI model 750 that uses the prompt, a segmentation region corresponding to the fourth object 324, and the input image 300 as input data. The output image may not include the fourth object 324.

Referring to FIG. 8D, the electronic device 101 may display a screen 890a. The screen 890a may include the input image 300. The electronic device 101 may receive a user input 871 for an object (e.g., the third object 323) having a relatively low priority among objects included in a predetermined region of the input image 300. In response to the user input 871, the electronic device 101 may display a description text 875. For example, the description text 875 may represent 'A teacher wearing a hat is helping the child'. The description text 875 may include a candidate prompt portion (e.g., the word 'hat'). For example, the candidate prompt portion may indicate that it is an editable object through additional indication (e.g., underlining, bolding, or a color different from the rest of the sentence). The electronic device 101 may receive a user input 872 for the candidate prompt portion. In response to the user input 871, the electronic device 101 may display a screen 890b.

The screen 890b may represent an object region including a hat of the third object 323. The electronic device 101 may set the object region as a region of interest. The electronic device 101 may adjust a magnification such that the object region is enlarged relative to the input image 300. A size of the hat of the third object 323 in the screen 890b may be greater than a size of the hat of the third object 323 in the screen 890a. The screen 890b may be used to provide options for image editing. The electronic device 101 may display a description text 885 corresponding to at least a portion of the description text 875. The electronic device 101 may receive a user input 880 on the description text 885. In response to the user input 880, the electronic device 101 may display candidate prompt portions for editing. The candidate prompt portions may include a first candidate prompt portion 881, a second candidate prompt portion 882, a third candidate prompt portion 883, and a fourth candidate prompt portion 884. The first candidate prompt portion 881 may include text 'change a color...'. The first candidate prompt portion 881 may indicate an editing action of changing a color of the hat of the third object 323 of the input image 300. The second candidate prompt portion 882 may include text 'sharpen'. The second candidate prompt portion 882 may indicate an editing action of sharpening the hat of the third object 323 of the input image 300. The third candidate prompt portion 883 may include text 'please remove'. The third candidate prompt portion 883 may indicate an editing action of removing the hat of the third object 323 of the input image 300. The fourth candidate prompt portion 884 may include text 'Tell me details'. The fourth candidate prompt portion 884 may be used to request an additional image editing option different from the first candidate prompt portion 881, the second candidate prompt portion 882, and the third candidate prompt portion 883. The electronic device 101 may generate a prompt 240 for image editing based on a user input indicating at least one of the above-described options.

In FIG. 8D, an example in which the screen 890b is displayed in response to the user input 872 is described, but embodiments of the present disclosure are not limited thereto. For example, in response to the user input 871, the electronic device 101 may display the screen 890b.

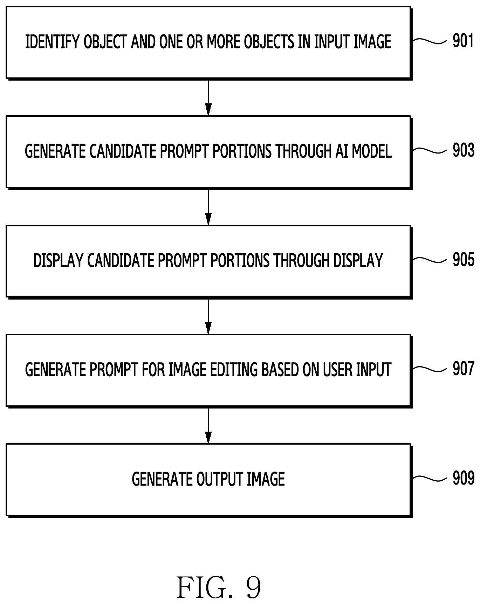

FIG. 9 illustrates an operation flow of an electronic device (e.g., an electronic device 101) for editing an image using a prompt (e.g., a prompt 240) generated through an AI model (e.g., an AI model 250).

Referring to FIG. 9, in operation 901, the electronic device 101 (e.g., a processor 120) may identify an object and one or more objects in an input image (e.g., an input image 210 or an input image 300). The electronic device 101 may identify the object (e.g., a first object 321). The object may be a target object. The target object represents an object that may be recognized as a major region within the input image. For example, the electronic device 101 may identify the target object from the input image through an AI algorithm. For example, the electronic device 101 may identify, as the target object, an object among objects of the input image that occupies a central region the most. For example, the electronic device 101 may identify the target object among the objects of the input image according to a category of an editing history of a user. The electronic device 101 may identify one or more objects (e.g., a second object 322 and a third object 323) related to the target object. For example, the electronic device 101 may identify an object positioned within a predetermined range from the target object. For example, the electronic device 101 may identify an object of the same type as the target object (e.g., in a case that the target object is a person, an object representing a person). For example, the electronic device 101 may identify an object having a property similar to the target object (e.g., the same color family).

In operation 903, the electronic device 101 (e.g., the processor 120) may generate candidate prompt portions through an AI model. For example, the candidate prompt portion may include a text for describing an object. For another example, the candidate prompt portion may be an icon or an image portion representing an object. The electronic device 101 may generate candidate prompt portions 220 from the input image 210 through the AI model (e.g., the AI model 250). The candidate prompt portions may be used to indicate that objects are editable through image processing.

In operation 905, the electronic device 101 (e.g., the processor 120) may display the candidate prompt portions. The electronic device 101 may display the candidate prompt portions through a display (e.g., a display module 160) to inform the user of the editable objects.

In operation 907, the electronic device 101 (e.g., the processor 120) may generate a prompt for image editing based on a user input. The electronic device 101 may receive a user input indicating at least one of the candidate prompt portions. For example, the user input may indicate a specific object within the input image. The electronic device 101 may input a candidate prompt portion corresponding to the user input into the AI model 250. The electronic device 101 may generate detailed prompt portions through the AI model 250. The detailed prompt portions 230 may be associated with the specific object indicated by the user input. Each of the detailed prompt portions may indicate a detailed item related to the specific object or indicate an editing action for the specific object. In response to user inputs, the electronic device 101 may determine a detailed prompt portion to guide editing in a direction desired by the user. If a detailed item is selected, the electronic device 101 may display an additional detailed item for the detailed item or indicate an editing action for the detailed item. In this manner, the electronic device 101 may provide a more detailed image editing function to the user. If a user input corresponding to an editing action is received, the electronic device 101 may generate a prompt (e.g., the prompt 240). The electronic device 101 may generate the prompt 240 including prompt portions based on the user inputs through the AI model (e.g., the AI model 250).

In operation 909, the electronic device 101 (e.g., the processor 120) may generate an output image. The electronic device 101 may generate an output image 760 through an image AI model 750. The electronic device 101 may generate the output image 760 through the image AI model 750 that uses the input image 210 (or the input image 300), the prompt 240, and a segmentation region 715 as input data.

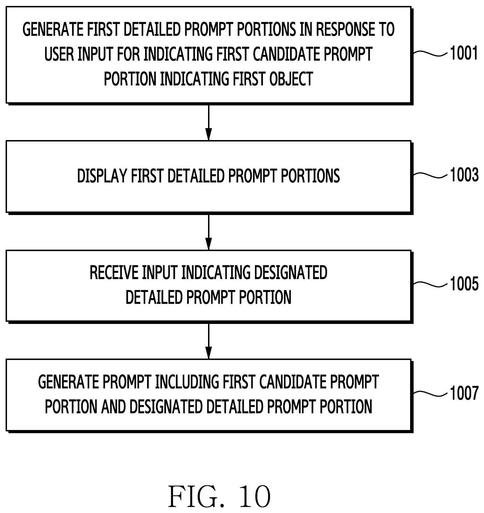

FIG. 10 illustrates an operation flow of an electronic device (e.g., an electronic device 101) for generating a prompt (e.g., a prompt 240) for image editing. The descriptions of FIG. 10 may be referred to as detailed operations of operation 907 of FIG. 9.

Referring to FIG. 10, in operation 1001, the electronic device 101 may generate first detailed prompt portions in response to a user input for indicating a first candidate prompt portion indicating a first object. The electronic device 101 may display a plurality of candidate prompt portions. The plurality of candidate prompt portions may indicate editable objects within an input image (e.g., an input image 300). The electronic device 101 may receive a user input indicating the first object among the editable objects. In response to the user input, the electronic device 101 may identify the first object. The electronic device 101 may determine a segmentation region corresponding to the first object in response to the user input. The electronic device 101 may determine detailed items for the first object. In order to display the detailed items to a user, the electronic device 101 may generate the first detailed prompt portions. For example, in a case that the first object is 'a boy wearing a hat and riding a horse', the detailed items may include the hat, the horse, clothes, and a facial expression of the boy.

In operation 1003, the electronic device 101 (e.g., a processor 120) may display the first detailed prompt portions. By displaying the first detailed prompt portions, the electronic device 101 may guide the user such that detailed editing of the first object is enabled.

In operation 1005, the electronic device 101 (e.g., the processor 120) may receive an input indicating a designated detailed prompt portion. The electronic device 101 may receive an input indicating the designated detailed prompt portion among the first detailed prompt portions. The input may include a touch input, a voice input, and/or a text input. The designated detailed prompt portion may indicate a specific detailed item (e.g., the hat) among the detailed items of the first object.

In operation 1007, the electronic device 101 (e.g., the processor 120) may generate a prompt (e.g., the prompt 240) including the first candidate prompt portion and the designated detailed prompt portion. The first candidate prompt portion may be used to select the first object. The designated detailed prompt portion may be used to select a specific detailed item (e.g., the hat) among the detailed items of the first object. An AI model (e.g., an AI model 250) of the electronic device 101 may generate the prompt 240 as a final command including the first candidate prompt portion and the designated detailed prompt portion. The prompt 240 may include information on a specific object or a portion of a specific object, and an editing action corresponding to user inputs. For example, the prompt 240 may be 'Please change a color of the hat of the boy wearing the hat and riding the horse to green'.

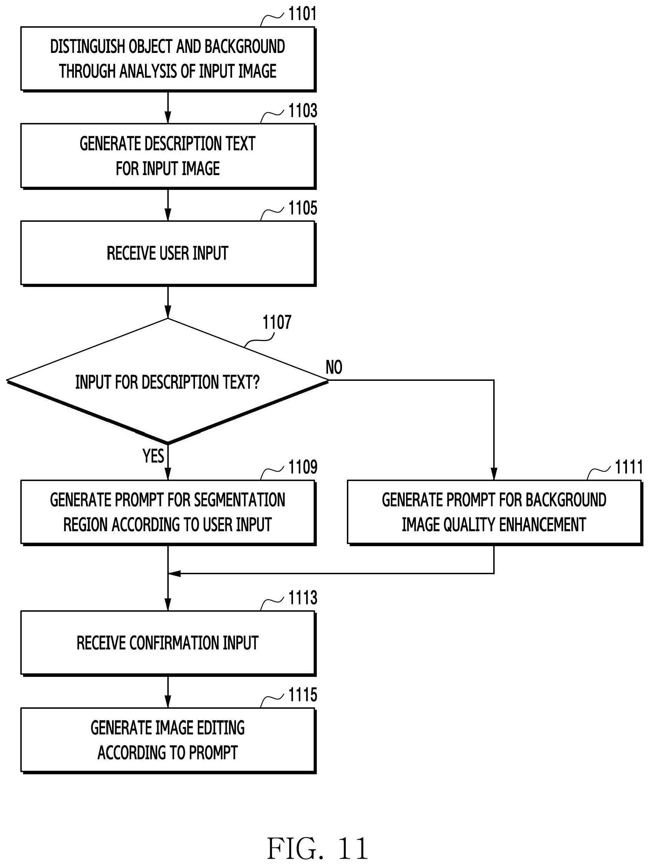

FIG. 11 illustrates an operation flow of an electronic device (e.g., an electronic device 101) for editing an image including an object and a background.

Referring to FIG. 11, in operation 1101, the electronic device 101 (e.g., a processor 120) may distinguish an object and a background through analysis of an input image (e.g., an input image 300). For example, the electronic device 101 may identify a background region 310 and objects (e.g., a first object 321, a second object 322, a third object 323, a fourth object 324, a fifth object 325, and a sixth object 326) of the input image 300.

In operation 1103, the electronic device 101 (e.g., the processor 120) may generate a description text for the input image 300. The description text may include a plurality of words. At least one word of the plurality of words may indicate at least one object included in the input image 300. The at least one object may represent an editable object. The at least one word may be used for generating a prompt. In order to indicate that a corresponding word is an editable object, the electronic device 101 may perform a separate indication (e.g., underlining, bolding, or a color different from the rest of the sentence) within the description text. A word indicating an editable object may be a candidate prompt portion.

In operation 1105, the electronic device 101 (e.g., the processor 120) may receive a user input. The user input may include a touch input on a screen, a text input through a separate input means, and/or a voice input.

In operation 1107, the electronic device 101 (e.g., the processor 120) may determine whether the user input is a user input for the description text. If the user input indicates a word of the description text, the electronic device 101 may determine that the user input is a user input for the description text. The electronic device 101 may perform operation 1109. If the user input does not indicate any of words of the description text, the electronic device 101 may determine that the user input is not a user input for the description text. The electronic device 101 may perform operation 1111.

In the operation 1109, the electronic device 101 (e.g., the processor 120) may generate a prompt for a segmentation region according to the user input. The user input may indicate a word on the description text. The electronic device 101 may identify an object indicated by the word. The electronic device 101 may determine a segmentation region occupied by the object within the input image 300. The electronic device 101 may generate a prompt for editing the segmentation region. For example, as exemplified through FIG. 8A to FIG. 8D, the electronic device 101 may collect candidate prompt portions selected by user inputs. The electronic device 101 may generate a prompt (e.g., a prompt 240) through an AI model (e.g., an AI model 250) that uses the collected candidate prompt portions as input data.

In the operation 1111, the electronic device 101 (e.g., the processor 120) may generate a prompt for background image quality enhancement. In a case that the user input does not indicate an object mentioned through the description text, the electronic device 101 may perform image processing on the background distinguished in the operation 1101. The electronic device 101 may generate a prompt for the image processing. For example, the image processing may include at least one of color adjustment, contrast adjustment, resolution adjustment, noise improvement, color tone adjustment, detail enhancement, or brightness adjustment. For example, the electronic device 101 may generate a prompt (e.g., the prompt 240) through the AI model (e.g., the AI model 250) that uses the background region 310 of the input image 300 and a candidate prompt portion according to the user input as input data.

In operation 1113, the electronic device 101 (e.g., the processor 120) may receive a confirmation input. The electronic device 101 may obtain the prompt 240 for image processing. The electronic device 101 may provide the user with a message inquiring whether to execute the prompt 240. For example, the electronic device 101 may display a message inquiring whether to execute the prompt 240 through a display (e.g., a display module 160). For example, the electronic device 101 may provide guidance inquiring whether to execute the prompt 240 through voice.

In operation 1115, the electronic device 101 (e.g., the processor 120) may generate image editing according to the prompt (e.g., the prompt 240). When the confirmation input is received, the electronic device 101 may input the prompt 240 to an image AI model (e.g., an image AI model 750). For example, the electronic device 101 may obtain an output image through the image AI model (e.g., the image AI model 750) that uses the input image 300, a segmentation region of an object indicated by the user input, and the prompt 240 of the operation 1109 as input data. For example, the electronic device 101 may obtain an output image through the image AI model (e.g., the image AI model 750) that uses the input image 300, the background region 310, and the prompt 240 of the operation 1111 as input data.

In the present disclosure, operations of an electronic device 101 are described. The electronic device 101 may be not only a mobile device for prompt generation or image editing, but also an augmented reality (AR) glass device, a head mount device (HMD), and/or a computer device for implementing a program. For example, generating, in real-time, a prompt for editing an image displayed through AR glasses according to a user input may also be understood as an embodiment of the present disclosure.

In embodiments, an electronic device is provided. The electronic device may comprise a display, a processor including processing circuitry, and memory storing instructions. The instructions may, when executed by the processor, cause the electronic device to identify an object and one or more objects associated with the object in an input image, generate candidate prompt portions for the object and the one or more objects through an artificial intelligence (AI) model, display the candidate prompt portions and the input image through the display, generate a prompt for image editing based on a user input for at least one of the candidate prompt portions, and generate an output image by performing the image editing on the input image according to the generated prompt through an image AI model. The candidate prompt portions may be used to indicate editable objects in the input image.

According to an embodiment, each of the candidate prompt portions may include a text for a corresponding object among the object and the one or more objects.

According to an embodiment, the instructions may, when executed by the processor individually or collectively, cause the electronic device to, in response to a user input indicating a first candidate prompt portion for a first object among the candidate prompt portions, generate first detailed prompt portions for the first object, and display the first detailed prompt portions through the display. Each of the first detailed prompt portions may indicate an editable object within a first object region of the first object or indicate an editing action for the first object.

According to an embodiment, the first detailed prompt portions may include a text representing an editable object, an image representing an editable object, or an image and text representing an editable object within the first object region.

According to an embodiment, the instructions may, when executed by the processor individually or collectively, cause the electronic device to identify the first object region corresponding to the first object, and display an image including the first object region with a magnification greater than a magnification in the input image through the display. The first detailed prompt portions may be displayed through the display while the image is displayed.

According to an embodiment, the instructions may, when executed by the processor individually or collectively, cause the electronic device to receive an input indicating a designated detailed prompt portion among the first detailed prompt portions, and generate the prompt including the first candidate prompt and the designated detailed prompt portion.

According to an embodiment, in a case that the first object is a person, the detailed prompt portions may include image processing related to a facial expression of the person. In a case that the first object is a product, the detailed prompt portions may include image processing related to a color of the product.

According to an embodiment, the instructions may, when executed by the processor individually or collectively, cause the electronic device to receive a second user input for a second object in the input image, the second object being different from the object and the one or more objects, generate, in response to the second user input, second detailed prompt portions associated with the second object, and display the second detailed prompt portions through the display. Each of the second detailed prompt portions may indicate an editable object within a second object region of the second object or indicate an editing action for the second object.

According to an embodiment, the instructions may, when executed by the processor individually or collectively, cause the electronic device to identify the second object region corresponding to the second object, and display an image including the second object region with a magnification greater than the magnification in the input image through the display. The second detailed prompt portions may be displayed through the display while the image is displayed.

According to an embodiment, the second detailed prompt portions may include a text representing an editable object, an image representing an editable object, or an image and text representing an editable object within the second object region.

According to an embodiment, the user input may indicate an editing object within the input image. The image AI model may, to generate the output image, use the generated prompt, the input image, and a segmentation region of the editing object as input data.

According to an embodiment, the instructions may, when executed by the processor individually or collectively, cause the electronic device to identify a background region of the input image, obtain a user input for the background region of the input image, generate a candidate prompt for image processing in the background region, display a message inquiring whether to execute the candidate prompt through the display, and in response to a user input indicating the execution of the candidate prompt, perform the image processing.

According to an embodiment, the image processing in the background region may include at least one of color adjustment, contrast adjustment, or brightness adjustment.

According to an embodiment, the instructions may, when executed by the processor individually or collectively, cause the electronic device to obtain a user input including at least one of a voice input, a text input, or a touch input, generate an editing prompt corresponding to the user input, and generate a second output image by performing image processing on the input image according to the editing prompt.

According to an embodiment, the AI model may include a generative AI model.

According to an embodiment, the image AI model may include a generative AI model.

In embodiments, an electronic device is provided. The electronic device may comprise a display, a processor including processing circuitry, and memory storing instructions. The instructions may, when executed by the processor individually or collectively, cause the electronic device to generate a text for an input image through an artificial intelligence (AI) model, display the input image and the text through the display, in response to a first user input for a target candidate prompt portion among candidate prompt portions of the text, identify an object corresponding to the target candidate prompt portion, generate, through the AI model, detailed prompt portions associated with the object, display the detailed prompt portions associated with the object through the display, and generate a prompt for image editing based on a second user input for indicating an execution prompt among the detailed prompt portions. The candidate prompt portions of the text may respectively correspond to editable objects within the input image.

According to an embodiment, each of the detailed prompt portions may indicate an editable object within an object region including the object or indicate an editing action for the object.

According to an embodiment, the instructions may, when executed by the processor individually or collectively, cause the electronic device to generate an output image according to the image editing through an image AI model that uses the generated prompt, the input image, and a segmentation region of the object as input data.

According to an embodiment, the instructions may, when executed by the processor individually or collectively, cause the electronic device to identify a background region of the input image, obtain a user input for the background region of the input image, generate a candidate prompt for image processing in the background region, display a message inquiring whether to execute the candidate prompt through the display, and in response to a user input indicating the execution of the candidate prompt, perform the image processing.

According to an embodiment, the image processing in the background region may include at least one of color adjustment, contrast adjustment, or brightness adjustment.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a display;
a processor including processing circuitry; and
memory storing instructions,
wherein the instructions cause, when executed by the processor individually or collectively, the electronic device to:
identify an object and one or more objects associated with the object in an input image,
generate candidate prompt portions for the object and the one or more objects through an artificial intelligence (AI) model,
display the candidate prompt portions and the input image through the display,
based on a user input for at least one of the candidate prompt portions, generate a prompt for image editing,
generate an output image by performing the image editing on the input image according to the generated prompt through an image AI model,
wherein the candidate prompt portions are used to indicate editable objects in the input image.

2. The electronic device of claim 1, wherein each of the candidate prompt portions includes a text for a corresponding object among the object and the one or more objects.

3. The electronic device of claim 1, wherein the instructions cause, when executed by the processor individually or collectively, the electronic device to:
in response to a user input indicating a first candidate prompt portion for a first object among the candidate prompt portions, generate first detailed prompt portions for the first object, and
display the first detailed prompt portions through the display,
wherein each of the first detailed prompt portions indicates an editable object within a first object region of the first object or indicates an editing action for the first object.

4. The electronic device of claim 3,
wherein the first detailed prompt portions include a text representing an editable object, an image representing an editable object, or an image and text representing an editable object within the first object region.

5. The electronic device of claim 3,
wherein the instructions cause, when executed by the processor individually or collectively, the electronic device to:
identify the first object region corresponding to the first object, and
display an image including the first object region with a magnification greater than a magnification in the input image through the display,
wherein the first detailed prompt portions are displayed through the display while the image is displayed.

6. The electronic device of claim 3, wherein the instructions cause, when executed by the processor individually or collectively, the electronic device to:
receive an input indicating a designated detailed prompt portion among the first detailed prompt portions, and
generate the prompt including the first candidate prompt and the designated detailed prompt portion.

7. The electronic device of claim 3,
wherein, in a case that the first object is a person, the detailed prompt portions include image processing related to a facial expression of the person, and
wherein, in a case that the first object is a product, the detailed prompt portions include image processing related to a color of the product.

8. The electronic device of claim 1, wherein the instructions cause, when executed by the processor individually or collectively, the electronic device to:
receive a second user input for a second object in the input image, the second object being different from the object and the one or more objects,
in response to the second user input, generate second detailed prompt portions associated with the second object, and
display the second detailed prompt portions through the display,
wherein each of the second detailed prompt portions indicates an editable object within a second object region of the second object or indicates an editing action for the second object,

9. The electronic device of claim 8, wherein the instructions cause, when executed by the processor individually or collectively, the electronic device to:
identify the second object region corresponding to the second object, and
display an image including the second object region with a magnification greater than the magnification in the input image through the display,
wherein the second detailed prompt portions are displayed through the display while the image is displayed,

10. The electronic device of claim 8,
wherein the second detailed prompt portions include a text representing an editable object, an image representing an editable object, or an image and text representing an editable object within the second object region.

11. The electronic device of claim 1,
wherein the user input indicates an editing object within the input image, and
wherein the image AI model, to generate the output image, uses the generated prompt, the input image, and a segmentation region of the editing object as input data.

12. The electronic device of claim 1, wherein the instructions cause, when executed by the processor individually or collectively, the electronic device to:
identify a background region of the input image,
obtain a user input for the background region of the input image,
generate a candidate prompt for image processing in the background region,
display a message inquiring whether to execute the candidate prompt through the display, and
in response to a user input indicating the execution of the candidate prompt, perform the image processing.

13. The electronic device of claim 12, wherein the image processing in the background region includes at least one of color adjustment, contrast adjustment, or brightness adjustment.

14. The electronic device of claim 1, wherein the instructions cause, when executed by the processor individually or collectively, the electronic device to:
obtain a user input including at least one of a voice input, a text input, or a touch input,
generate an editing prompt corresponding to the user input, and
generate a second output image by performing image processing on the input image according to the editing prompt.

15. The electronic device of claim 1, wherein the image AI model includes a generative AI model.
